# EUROPEAN PATENT APPLICATION

(11) **EP 4 835 596 A1**
(43) Date of publication of application: **04.11.2026**
(21) Application number: 23963189.8
(22) Date of filing: 28.12.2023
(51) Int. Cl.: G05B 23/02

(54) **PLANT ABNORMALITY DIAGNOSIS SYSTEM**

(71) Applicant: Mitsubishi Generator Co., Ltd., Kobe City, Hyogo 652-8555 (JP)
(72) Inventor: KURIHARA, Tamami, Tokyo 100-8332 (JP); KAKIMOTO, Tadaaki, Tokyo 100-8332 (JP); TONOSU, Shigeki, Tokyo 100-8332 (JP); IWASHIGE, Kengo, Tokyo 100-8332 (JP); MORITA, Tetsuji, Tokyo 100-8332 (JP)
(74) Representative: Witte, Weller & Partner Patentanwälte mbB
(86) International application number: PCT/JP2023/047172
(87) International publication number: WO 2025/141841

(57) **Abstract**

A plant abnormality diagnosis system for diagnosing an abnormal event that occurs in a plant includes: a first score calculation unit configured to, with respect to a plurality of types of sensors installed in the plant, calculate, for each of the sensors, a first score indicating a degree of abnormality of an actual measured value by the sensor; a comprehensive evaluation score calculation unit configured to, with respect to a plurality of types of abnormal events having a possibility of occurring in the plant, calculate, for each of the abnormal events, a comprehensive evaluation score indicating a magnitude of possibility that the abnormal event has occurred, on the basis of a weight coefficient indicating for each sensor a degree of correlation between each of the abnormal events and the sensor, and the first score for each sensor calculated by the first score calculation unit; and a diagnostic result output unit configured to extract, from among the plurality of types of abnormal events, a candidate for the abnormal event that has occurred in the plant on the basis of the comprehensive evaluation scores for the respective abnormal events calculated by the comprehensive evaluation score calculation unit, and configured to output information including the extracted candidate for the abnormal event as a diagnostic result for the plant.

## Description

### TECHNICAL FIELD

The present disclosure relates to a plant abnormality diagnosis system.

### BACKGROUND ART

Patent Document 1 discloses a monitoring and diagnosis system that monitors a plant and performs abnormality diagnosis on the plant. This monitoring and diagnosis system refers to a determination/evaluation result database, sequentially reads a difference from a threshold in operating data of the plant, and then, refers to the abnormality-sign/abnormal-event related information database. At this time, the monitoring and diagnosis system identifies, using a parameter associated with the operating data, an abnormal event occurring as an event that causes the difference from the threshold, acquires information such as an extent of progress of the abnormality and recommended countermeasures, and registers these as diagnostic result data in a diagnostic result database.

### CITATION LIST

### PATENT DOCUMENT

Patent Document 1: Japanese Laid-Open Patent Publication No. 2020-107025

### SUMMARY OF THE INVENTION

### PROBLEM TO BE SOLVED BY THE INVENTION

In a plant, a plurality of types of abnormal events may occur, and it is required to accurately diagnose, among these abnormal events, the abnormal event that has actually occurred. However, the system disclosed in Patent Document 1 has room for improvement in terms of the accuracy of the diagnosing of abnormal events.

In view of the above circumstances, an object of at least one embodiment of the present disclosure is to provide a plant abnormality diagnosis system capable of accurately diagnosing an abnormal event in a plant.

### MEANS TO SOLVE THE PROBLEM

In order to attain the above-described object, a plant abnormality diagnosis system according to at least one embodiment of the present disclosure is a plant abnormality diagnosis system for diagnosing an abnormal event that occurs in a plant, the plant abnormality diagnosis system including:
a first score calculation unit configured to, with respect to a plurality of types of sensors installed in the plant, calculate, for each of the sensors, a first score indicating a degree of abnormality of an actual measured value by the sensor;
a comprehensive evaluation score calculation unit configured to, with respect to a plurality of types of abnormal events having a possibility of occurring in the plant, calculate, for each of the abnormal events, a comprehensive evaluation score indicating a magnitude of possibility that the abnormal event has occurred, on the basis of a weight coefficient indicating for each sensor a degree of correlation between each of the abnormal events and the sensor, and the first score for each sensor calculated by the first score calculation unit; and
a diagnostic result output unit configured to extract, from among the plurality of types of abnormal events, a candidate for the abnormal event that has occurred in the plant on the basis of the comprehensive evaluation scores for the respective abnormal events calculated by the comprehensive evaluation score calculation unit, and configured to output information including the extracted candidate for the abnormal event as a diagnostic result for the plant.

### EFFECT OF THE INVENTION

According to at least one embodiment of the present disclosure, a plant abnormality diagnosis system capable of accurately diagnosing an abnormal event in a plant is provided.

### BRIEF DESCRIPTION OF THE DRAWINGS

[FIG. 1] FIG. 1 shows a schematic configuration of a thermal power plant 4 to be diagnosed by a plant abnormality diagnosis system 2 according to an embodiment.
[FIG. 2] FIG. 2 shows an example of the hardware configuration of the plant abnormality diagnosis system 2.
[FIG. 3] FIG. 3 is a block diagram showing an example of the functional configuration of the plant abnormality diagnosis system 2 shown in FIG. 1 and FIG. 2.
[FIG. 4] FIG. 4 shows the flow of abnormality diagnosis performed by the plant abnormality diagnosis system 2 shown in FIG. 3.
[FIG. 5A] FIG. 5A illustrates an example of a sign of an abnormality in S103 in FIG. 3, and shows a comparison between actual measured values by a sensor 6 that measures the field current of a generator G in a plant 4, and predicted values therefor.
[FIG. 5B] FIG. 5B is a graph showing the differences between the actual measured values by the sensor 6 and the predicted values shown in FIG. 5A, and thresholds (upper limit value and lower limit value) used in S103.
[FIG. 6] FIG. 6 shows an example of a weight coefficient table E.
[FIG. 7] FIG. 7 illustrates a method for calculating comprehensive evaluation scores S3 using first scores S1 and weight coefficients W.
[FIG. 8] FIG. 8 shows an example of information indicating a diagnostic result for the plant 4 outputted by a diagnostic result output unit 18.
[FIG. 9] FIG. 9 is a table showing, as the information indicating the diagnostic result, a specific sensor 6 that defines, for each of abnormal events, a necessary condition for the diagnostic result output unit 18 to extract a candidate for an abnormal event.

### DESCRIPTION OF EMBODIMENTS

Hereinafter, several embodiments of the present disclosure will be described with reference to the accompanying drawings. However, dimensions, materials, shapes, relative arrangement, and the like of components described in the embodiments or shown in the drawings are not intended to limit the scope of the present disclosure thereto and are merely explanatory examples.

For example, each of expressions indicating relative or absolute arrangement such as "in a certain direction", "along a certain direction", "parallel", "orthogonal", "center", "concentric", or "coaxial" not only strictly indicates such arrangement but also indicates a state where a relative displacement has occurred with a tolerance or with such an angle or a distance that the same function is obtained.

For example, each of expressions indicating that things are in an equivalent state such as "identical", "equal", and "even" not only indicates a strictly equivalent state but also indicates a state where there is a tolerance or such a difference that the same function is obtained.

For example, each of expressions indicating shapes such as a quadrangular shape and a cylindrical shape not only indicates a shape such as a quadrangular shape or a cylindrical shape in a geometrically strict sense but also indicates a shape including a recess/projection, a chamfered portion, or the like within such a range that the same effect is obtained.

Meanwhile, expressions of "comprising", "provided with", "including", "containing", and "having" a constituent are not exclusive expressions excluding presence of another constituent.

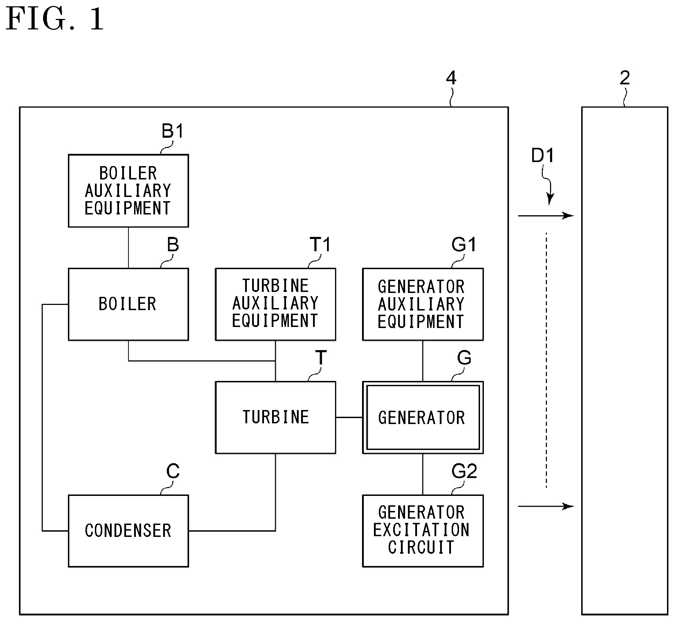

FIG. 1 shows a schematic configuration of a thermal power plant 4 to be diagnosed by a plant abnormality diagnosis system 2 according to an embodiment.

The thermal power plant 4 (hereinafter, simply referred to as "plant 4") shown in FIG. 1 includes, as main equipment, a boiler B, a turbine T, and a generator G, and further includes a plurality pieces of large auxiliary equipment such as a boiler auxiliary equipment B1, a turbine auxiliary equipment T1, a generator auxiliary equipment G1, a condenser C, and a generator excitation circuit G2. Although not shown in FIG. 1, various sensors installed in the thermal power plant 4 detect various physical quantities such as process variables and state variables, and operating data D1 including the detected physical quantities is imported into the plant abnormality diagnosis system 2.

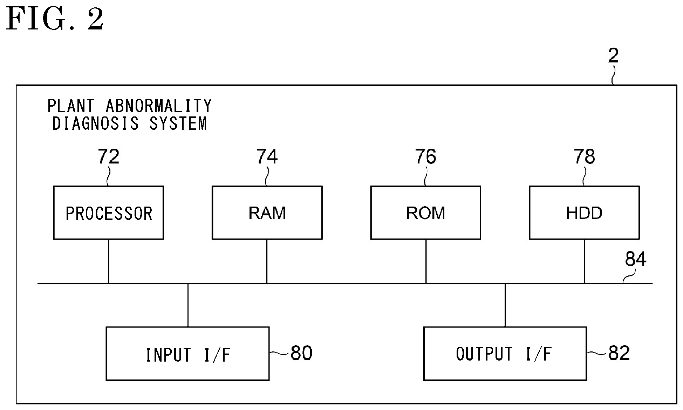

FIG. 2 shows an example of the hardware configuration of the plant abnormality diagnosis system 2.

As shown in FIG. 2, the plant abnormality diagnosis system 2 is configured using a computer that includes, for example, a processor 72, a random access memory (RAM) 74, a read only memory (ROM) 76, a hard disk drive (HDD) 78, an input I/F 80, and an output I/F 82, which are interconnected via a bus 84. The hardware configuration of the plant abnormality diagnosis system 2 is not limited to the above, and may be implemented by a combination of a control circuit and a storage device. Furthermore, the plant abnormality diagnosis system 2 is configured by the computer executing programs that implement the respective functions of the plant abnormality diagnosis system 2. The functions of each component of the plant abnormality diagnosis system 2 described below are implemented, for example, by loading a program stored in the ROM 76 into the RAM 74 and executing the program on the processor 72, while performing read and write operations on data in the RAM 74 and the ROM 76. The hardware constituting the plant abnormality diagnosis system 2 may be centralized in a single location or distributed across a plurality of locations.

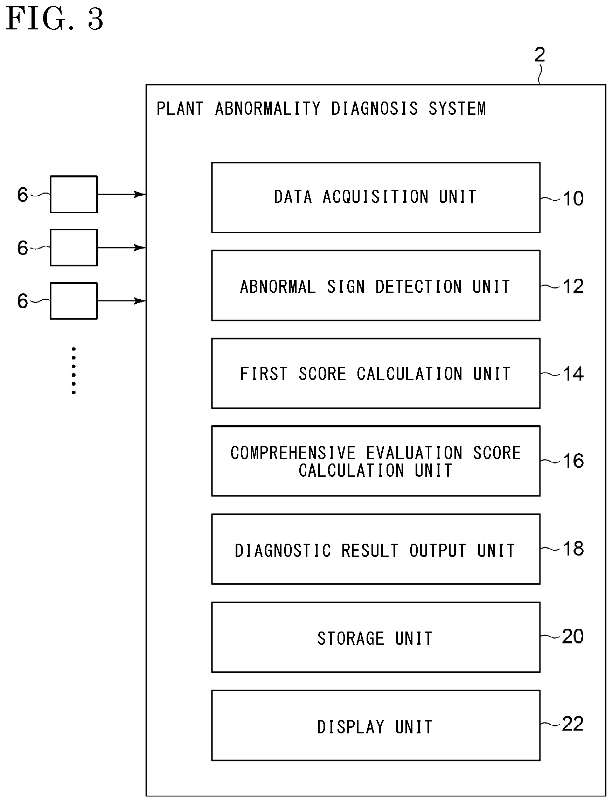

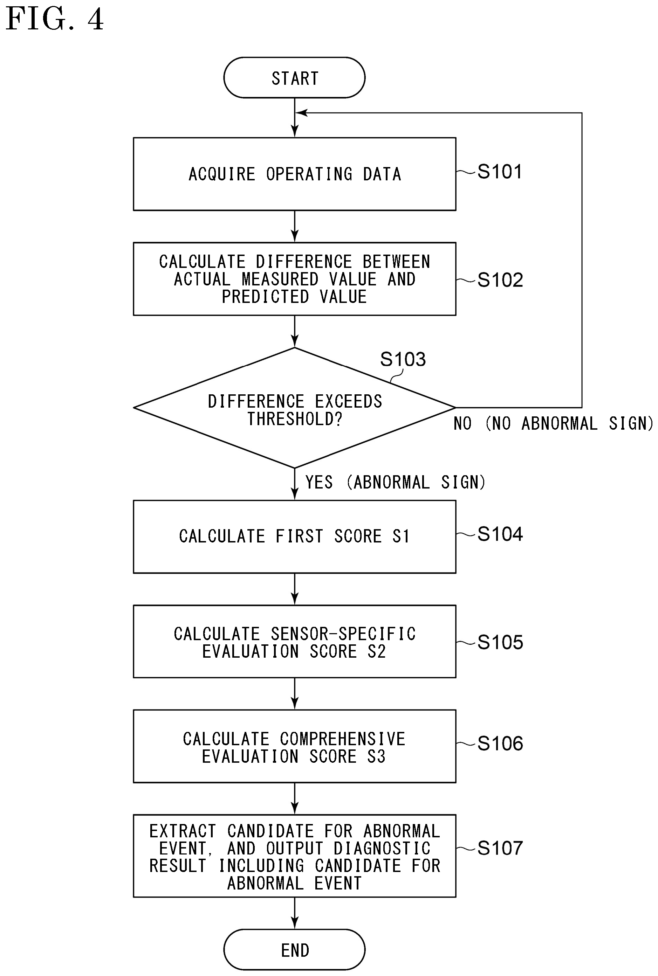

FIG. 3 is a block diagram showing an example of the functional configuration of the plant abnormality diagnosis system 2 shown in FIG. 1 and FIG. 2. FIG. 4 shows the flow of abnormality diagnosis performed by the plant abnormality diagnosis system 2 shown in FIG. 3.

As shown in FIG. 3, the plant abnormality diagnosis system 2 includes a data acquisition unit 10, an abnormal sign detection unit 12, a first score calculation unit 14, a comprehensive evaluation score calculation unit 16, a diagnostic result output unit 18, a storage unit 20, and a display unit 22.

As shown in FIG. 4, in S101, the data acquisition unit 10 acquires operating data D1 of the plant 4 from a plurality of types of sensors 6 installed in the plant 4. Here, the operating data D1 includes time-series data for actual measured values of a plurality of types of physical quantities in a plurality pieces of equipment (such as the generator G and the generator auxiliary equipment G1 described above) installed in the plant 4, the actual measured values being obtained through measurement by the plurality of types of sensors 6. For example, in the case of the generator G in the plant 4, examples of the plurality of types of physical quantities measured by the plurality of types of sensors 6 include active power, reactive power, field current, field voltage, field coil resistance, power factor, and armature current.

Next, in S102, the abnormal sign detection unit 12, with respect to the plurality of types of sensors 6, calculates, for each of the sensors 6, the difference between the actual measured value of the physical quantity measured by the sensor 6, and the predicted value obtained by using multiple regression analysis to predict the output from the sensor 6 (the physical quantity measured by the sensor 6).

In this multiple regression analysis, a prediction model M for predicting a response variable (dependent variable) from a plurality of explanatory variables (independent variables) in the plant 4 is created in advance on the basis of the operating data D1 (operating data existing in a normal region) of the plant 4, which is obtained when the plant 4 is normally operating, and the prediction model M is stored in the storage unit 20. Then, the abnormal sign detection unit 12 inputs the operating data D1, which is subjected to abnormal diagnosis, into the prediction model M read from the storage unit 20, and uses the prediction model M to calculate the predicted value obtained by predicting each of the outputs from the plurality of types of sensors 6. Then, as described above, the abnormal sign detection unit 12 calculates, for each sensor 6, the difference (i.e., a value obtained by subtracting the predicted value from the actual measured value by the sensor 6) between the actual measured value by the sensor 6 and the predicted value obtained by using multiple regression analysis to predict the output from the sensor 6 (i.e., the predicted value of the output from the sensor 6 calculated using the prediction model M).

In the present specification including the following description, the term "actual measured value" refers to the value of a physical quantity measured by the sensor 6, and the term "predicted value" refers to the predicted value of the output from the sensor 6 which is calculated on the basis of the operating data D1 in S102.

Next, in S103, if the difference (i.e., the difference between an actual measured value by the sensor 6 and a predicted value therefor) calculated in S102 for at least one type of sensor 6 among the plurality of types of sensors 6 exceeds a threshold thereof, the abnormal sign detection unit 12 determines that there is a sign of an abnormality in the plant 4 (detects a sign of an abnormality), and the process proceeds to S104. In S103, if none of the differences calculated in S102 for the plurality of types of sensors 6 exceeds the threshold, the abnormal sign detection unit 12 determines that there is no sign of an abnormality in the plant 4, and the process returns to S101. Here, such thresholds may be an upper limit value (positive threshold) and a lower limit value (negative threshold) for defining a normal range of each value obtained from the sensor 6, and are defined for each sensor 6 and stored in the storage unit 20. In this case, if the difference calculated in S102 for at least one type of the plurality of types of sensors 6 is greater than the upper limit value (exceeds the upper limit value in the positive direction) or smaller than the lower limit value (exceeds the lower limit value in the negative direction), the abnormal sign detection unit 12 may determine that there is a sign of an abnormality in the plant 4.

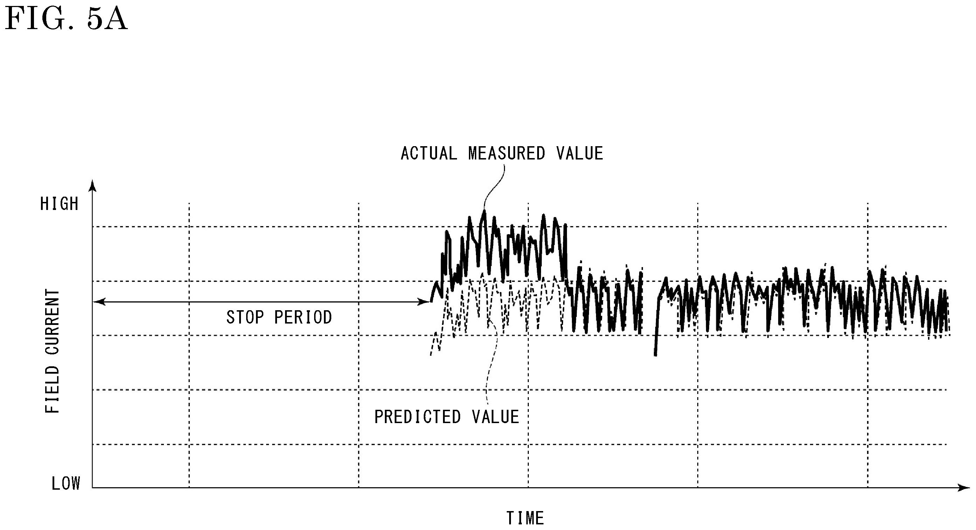

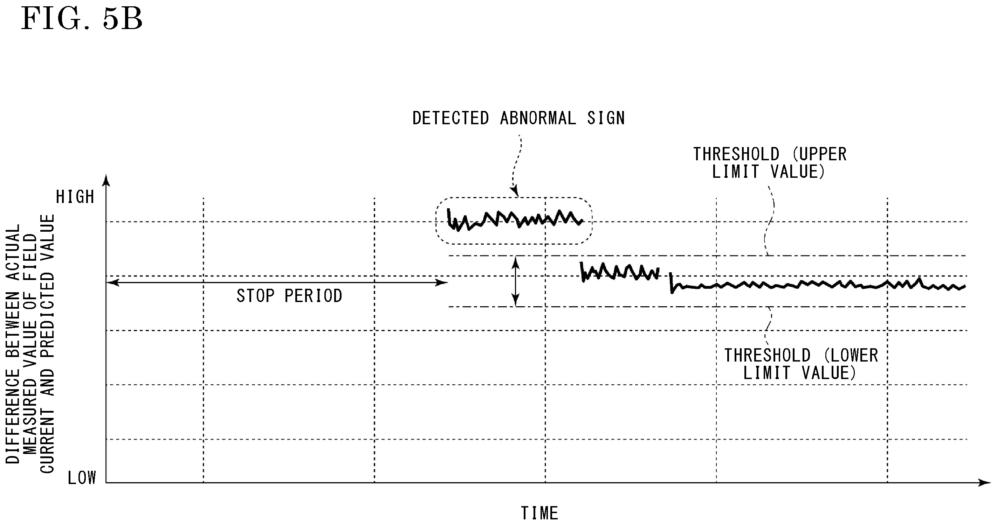

FIG. 5A illustrates an example of a sign of an abnormality in S103, and shows time-series data for actual measured values by the sensor 6 that measures the field current of the generator G in the plant 4 and time-series data for predicted values therefor. FIG. 5B is a graph that shows time-series data for the differences between the actual measured values by the sensor 6 and the predicted values shown in FIG. 5A, and the thresholds (upper limit value and lower limit value) used in S103. In the examples shown in FIG. 5A and FIG. 5B, immediately after the generator G starts following the end of the operation stop period of the generator G, the actual measured value by the sensor 6 significantly deviates from the predicted value, and the difference between the actual measured value and the predicted value exceeds the threshold (the upper limit value in the example shown in FIG. 5B). Accordingly, the abnormal sign detection unit 12 determines that there is a sign of an abnormality in the plant 4.

With reference back to FIG. 4, in S104, the first score calculation unit 14, with respect to the plurality of types of sensors 6 installed in the plant 4, calculates, for each of the sensors 6, a first score S1 indicating the degree of abnormality of the actual measured value by the sensor 6. For example, the first score calculation unit 14 may calculate, as the first score S1, a value (e.g., a value proportional to the difference) having a positive correlation with the difference, calculated for each sensor 6 in S102, between the actual measured value by the sensor 6 and the predicted value. Alternatively, the first score calculation unit 14 may calculate, as the first score S1, the absolute value of a value obtained by dividing the difference, calculated for each sensor 6 in S102, between the actual measured value by the sensor 6 and the predicted value, by the above-described threshold (the upper limit value or the lower limit value used in S103) set for each sensor.

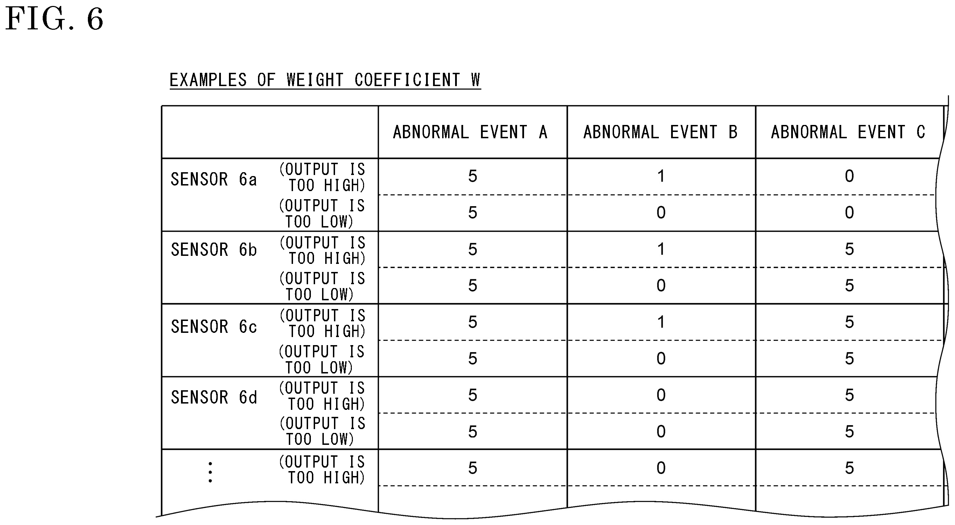

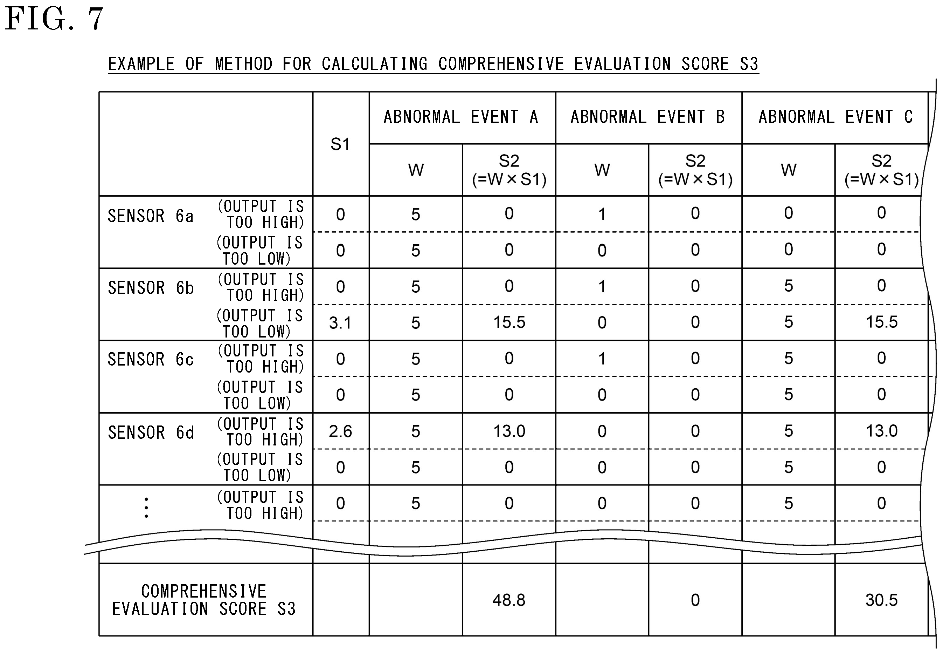

In S105, the comprehensive evaluation score calculation unit 16, with respect to a plurality of types of abnormal events having a possibility of occurring in the plant 4, calculates, for each of the abnormal events, a sensor-specific evaluation score S2 that is a value (i.e., W × S1) obtained by multiplying, for each sensor 6, a weight coefficient W indicating for each sensor 6 the degree of correlation between the abnormal event and the sensor 6, by the first score S1 for each sensor 6 calculated by the first score calculation unit 14. For example, in the case of the generator G in the plant 4, examples of the plurality of types of abnormal events include an abnormality in an instrument or a transmitter, a sudden change in the power system-side state, a layer short circuit in the field winding, a change in the rotor balance, a high turbine output, and an abnormality in the lubricating oil pressure control valve. In addition, in an example shown in FIG. 6, the weight coefficient W ranges from 0 to 5, and the larger the value is, the stronger the degree of correlation between the abnormal event and the sensor is. The storage unit 20 may store a weight coefficient table E (see FIG. 6) that defines the weight coefficients W indicating for each sensor 6 the degree of correlation between each of abnormal events and the sensor 6. In this case, the comprehensive evaluation score calculation unit 16 refers to the weight coefficient table E stored in the storage unit 20, and calculates, for each sensor 6, the sensor-specific evaluation score S2 for each of the abnormal events as shown in FIG. 7 by multiplying, for each sensor 6, the weight coefficient W indicating for each sensor 6 the degree of correlation between each of the abnormal events and the sensor 6, by the first score S1 for each sensor 6 calculated by the first score calculation unit 14.

In the examples shown in FIG. 6 and FIG. 7, the weight coefficients are varied as necessary depending on whether the difference between the actual measured value by the sensor 6 and the predicted value is greater than the upper limit value (the output from the sensor 6 is higher than the predicted value) or smaller than the lower limit value (the output from the sensor 6 is lower than the predicted value). For example, in a case where the abnormal event B is "high turbine output", the actual measured values of the active power, the reactive power, and the like of the generator G do not become lower than predicted values therefor. Thus, for weight coefficients W that each indicate the degree of correlation between the abnormal event B and the sensor 6 that measures the active power, the reactive power, and the like of the generator G (e.g., the sensors 6a to 6c in the example shown in FIG. 7), only weight coefficients W corresponding to a case where the difference between an actual measured value by the sensor 6 and a predicted value therefor is greater than an upper limit value thereof may be set to 1, and weight coefficients W corresponding to a case where the difference between the actual measured value by the sensor 6 and the predicted value is smaller than a lower limit value thereof may be set to 0.

Next, in S106, the comprehensive evaluation score calculation unit 16 calculates a comprehensive evaluation score S3 for each abnormal event by summing, for each abnormal event, the sensor-specific evaluation scores S2 for the plurality of types of sensors 6 calculated in S105. For example, in the example shown in FIG. 7, the comprehensive evaluation score calculation unit 16 sums, for the abnormal event A, 0 as the sensor-specific evaluation score S2 for the sensor 6a, 15.5 as the sensor-specific evaluation score S2 for the sensor 6b, 0 as the sensor-specific evaluation score S2 for the sensor 6c, 13.0 as the sensor-specific evaluation score S2 for the sensor 6d, and the respective sensor-specific evaluation scores S2 for all other sensors 6, thereby calculating 48.8 as the comprehensive evaluation score S3 for the abnormal event A. Similarly, for each of the other abnormal events, the comprehensive evaluation score calculation unit 16 calculates the comprehensive evaluation score S3 for each abnormal event by summing, for each abnormal event, the sensor-specific evaluation scores S2 for the plurality of types of sensors 6.

Next, in S107, the diagnostic result output unit 18 extracts, from among a plurality of types of abnormal events, a candidate for the abnormal event that has occurred in the plant 4, on the basis of the comprehensive evaluation scores S3 for the respective abnormal events calculated by the comprehensive evaluation score calculation unit 16, and outputs information including the extracted candidate for the abnormal event as a diagnostic result for the plant 4. For example, on the basis of the comprehensive evaluation scores S3 for the respective abnormal events calculated by the comprehensive evaluation score calculation unit 16, the diagnostic result output unit 18 may extract, from among the plurality of types of abnormal events, one or more abnormal events in descending order of the comprehensive evaluation score S3, or may extract, from among the plurality of types of abnormal events, a plurality of abnormal events in descending order of the comprehensive evaluation score S3.

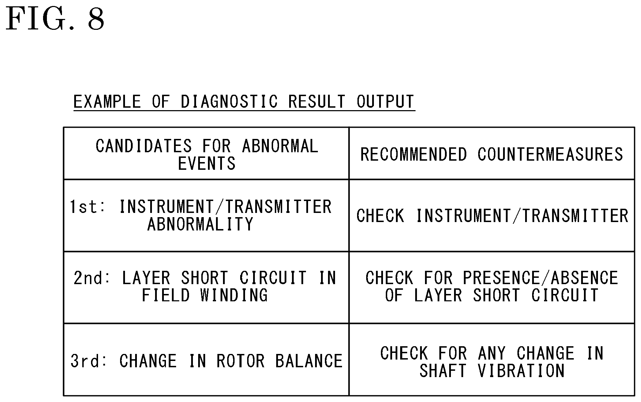

FIG. 8 is an example of information indicating a diagnostic result for the plant 4 outputted in S107. The diagnostic result shown in FIG. 8 includes the top three abnormal events selected in descending order of the comprehensive evaluation score S3 from among the plurality of types of abnormal events, and the recommended countermeasures for these abnormal events. In the illustrated example, the diagnostic result respectively indicates, as the first, second, and third ranked candidates for the abnormal events, "Instrument/transmitter abnormality", "Layer short circuit in field winding", and "Change in rotor balance", and, as the countermeasures for the abnormal events, "Check instrument/transmitter", "Check for presence/absence of layer short circuit", and "Check for any change in shaft vibration". The diagnostic result output unit 18 may be configured to output information indicating the above diagnostic result to a display unit 22 (see FIG. 3) such as a display, thereby causing the display unit 22 to display the above diagnostic result.

In the above-described plant abnormality diagnosis system 2, a comprehensive evaluation score S3 is calculated on the basis of a weight coefficient W indicating for each sensor 6 the degree of correlation between each of the abnormal events and the sensor 6 and a first score S1 indicating for each sensor 6 the degree of abnormality of an actual measured value by the sensor 6, and a candidate for abnormality diagnosis is extracted on the basis of the respective comprehensive evaluation scores S3, so that it is possible to accurately diagnose an abnormal event in the plant 4. According to the present disclosure inventors, it has been confirmed that the diagnostic results obtained by the above-described plant abnormality diagnosis system 2 approximately correspond to the analysis results and diagnostic examples provided by experts. Even a person who does not possess advanced skills related to abnormality diagnosis of the plant 4 can accurately diagnose an abnormal event in the plant 4 by using the plant abnormality diagnosis system 2. Furthermore, in the plant abnormality diagnosis system 2, it is possible to accurately diagnose abnormal events in a plurality pieces of equipment such as the generator G and the generator auxiliary equipment G1 in the plant 4.

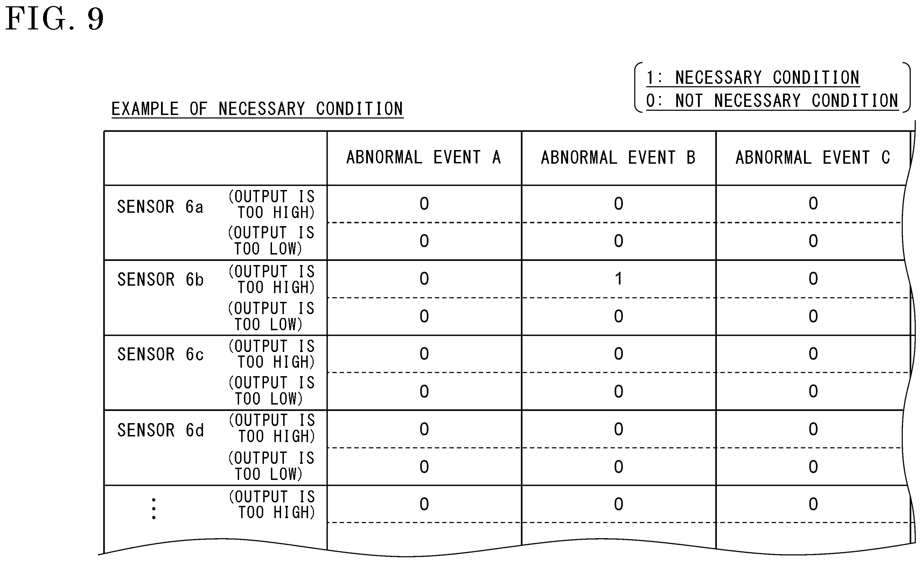

In some embodiments, the diagnostic result output unit 18 may be configured to, if the difference between the actual measured value by a specific sensor 6 among the plurality of types of sensors 6 and the predicted value does not exceed a threshold thereof, exclude, from the candidate for the abnormal event in the diagnostic result, a specific abnormal event associated with the specific sensor 6 among the plurality of types of abnormal events, regardless of the comprehensive evaluation score S3 for the specific abnormal event. In this case, as shown in FIG. 9, the storage unit 20 (see FIG. 3) may store therein information indicating a necessary condition for each of the plurality of types of abnormal events to be extracted as the candidate for the abnormal event by the diagnostic result output unit 18.

In an example shown in FIG. 9, the above-described necessary condition stored in the storage unit 20 includes the fact that the difference between an actual measured value by a specific sensor 6 (sensor 6b in the illustrated example) among the plurality of types of sensors 6 and a predicted value therefor exceeds a threshold thereof. In the example shown in FIG. 9, the number "1" or "0" is assigned to each sensor 6 as information for identifying, for each of the abnormal events, whether the sensor 6 is the specific sensor 6: the number "1" indicating that the sensor 6 is the specific sensor 6 is assigned to the specific sensor 6; and the number "0" indicating that the sensor 6 is not the specific sensor 6 is assigned to the sensor 6 that is not the specific sensor 6. The example shown in FIG. 9 means that the difference between the actual measured value by the sensor 6b and the predicted value always exceeds the threshold (upper limit value) when the abnormal event B, which is the specific abnormal event, has occurred in the plant 4, and the necessary condition for the abnormal event B to be extracted as the candidate by the diagnostic result output unit 18 includes the fact that the difference between the actual measured value by the sensor 6b, which is the specific sensor 6, and the predicted value exceeds the threshold (is greater than the upper limit value).

For example, in a case where the abnormal event B is a layer short circuit in the field winding and the sensor 6b is a sensor that detects the field current, when a layer short circuit in the field winding has occurred, the difference between an actual measured value by the sensor 6b that detects the field current and a predicted value therefor should always exceed a threshold thereof. Thus, when the difference between the actual measured value by the sensor 6b and the predicted value does not exceed the threshold, the diagnostic result output unit 18 does not extract the abnormal event B as the candidate for the abnormal event, regardless of the comprehensive evaluation score S3 for the abnormal event B. Only when the difference between the actual measured value by the sensor 6b and the predicted value exceeds the threshold, if the rank of the abnormal event B determined according to the comprehensive evaluation score S3 is within a predetermined rank (e.g., within the top three), the diagnostic result output unit 18 extracts the abnormal event B as the candidate for the abnormal event.

In the example shown in FIG. 9, the information (1 or 0) for identifying whether the sensor 6 is the specific sensor 6 is varied as necessary depending on whether the difference between the actual measured value by the sensor 6 and the predicted value is greater than the upper limit value (the output from the sensor 6 is too high) or smaller than the lower limit value (the output from the sensor 6 is too low).

According to the embodiment described with reference to FIG. 9, when the difference between the actual measured value by the specific sensor 6b and the predicted value does not exceed the threshold, the diagnostic result output unit 18 excludes the abnormal event B from the candidate for the abnormal event in the diagnostic result, regardless of the comprehensive evaluation score S3 for the abnormal event B associated with the specific sensor 6b. Thus, when the diagnostic result output unit 18 extracts candidates for the abnormal events, the candidates for the abnormal events can be appropriately narrowed down, so that it is possible to accurately diagnose an abnormal event in the plant 4.

Not limited to the above-described embodiments, the present disclosure includes modifications of the above-described embodiments and appropriate combinations thereof.

For example, in the above embodiment, although the abnormal sign detection unit 12 uses multiple regression analysis to calculate a predicted value for the sensor 6, the method for calculating the predicted value for the sensor 6 is not limited to multiple regression analysis and may be, for example, the Mahalanobis-Taguchi method (MT method).

In addition, in an example shown in FIG. 4, S104 to S107 are performed if the difference between an actual measured value by the sensor 6 and a predicted value therefor exceeds a threshold thereof. However, the trigger for performing S104 to S107 is not limited to the case where the difference between the actual measured value by the sensor 6 and the predicted value exceeds the threshold, and S104 to S107 may be periodically performed at predetermined intervals, for example.

In some embodiments, the abnormal sign detection unit 12 may be configured to be able to change the threshold used in S103, and when the threshold is used for calculating the first score S1, to be able to change the threshold used for calculating the first score S1.

The contents described in the above embodiments are understood as follows, for example.
[1] A plant abnormality diagnosis system (e.g., the above-described plant abnormality diagnosis system 2) according to at least one embodiment of the present disclosure is a plant abnormality diagnosis system for diagnosing an abnormal event that occurs in a plant (e.g., the above-described plant 4), the plant abnormality diagnosis system including:
   a first score calculation unit (e.g., above-described first score calculation unit 14) configured to, with respect to a plurality of types of sensors (e.g., above-described plurality of types of sensors 6) installed in the plant, calculate, for each of the sensors, a first score (e.g., above-described first score S1) indicating a degree of abnormality of an actual measured value by the sensor;
   a comprehensive evaluation score calculation unit (e.g., above-described comprehensive evaluation score calculation unit 16) configured to, with respect to a plurality of types of abnormal events having a possibility of occurring in the plant, calculate, for each of the abnormal events, a comprehensive evaluation score (e.g., above-described comprehensive evaluation score S3) indicating a magnitude of possibility that the abnormal event has occurred, on the basis of a weight coefficient (e.g., above-described weight coefficient W) indicating for each sensor a degree of correlation between each of the abnormal events and the sensor, and the first score for each sensor calculated by the first score calculation unit; and
   a diagnostic result output unit (e.g., above-described diagnostic result output unit 18) configured to extract, from among the plurality of types of abnormal events, a candidate for the abnormal event that has occurred in the plant, on the basis of the comprehensive evaluation scores for the respective abnormal events calculated by the comprehensive evaluation score calculation unit, and configured to output information including the extracted candidate for the abnormal event as a diagnostic result for the plant.

In the plant abnormality diagnosis system according to the above [1], the comprehensive evaluation score is calculated on the basis of the weight coefficient indicating for each sensor the degree of correlation between each of the abnormal events and the sensor and the first score indicating for each sensor the degree of abnormality of the actual measured value by the sensor, and the candidate for the abnormality diagnosis is extracted on the basis of the comprehensive evaluation scores, so that it is possible to accurately diagnose the abnormal event in the plant.

[2] In some embodiments, in the plant abnormality diagnosis system according to the above [1],
the diagnostic result output unit is configured to extract, from among the plurality of types of abnormal events, the abnormal event having a highest comprehensive evaluation score as one of said candidates, on the basis of the comprehensive evaluation scores for the respective abnormal events calculated by the comprehensive evaluation score calculation unit.

In the plant abnormality diagnosis system according to the above [2], the abnormal event having the highest comprehensive evaluation score is extracted as one of the above-described candidates from among the plurality of types of abnormal events, so that it is possible to accurately diagnose the abnormal event in the plant.

[3] In some embodiments, in the plant abnormality diagnosis system according to the above [1] or [2],
the comprehensive evaluation score calculation unit is configured to calculate, for each of the plurality of types of abnormal events, a sensor-specific evaluation score (e.g., above-described sensor-specific evaluation score S2) that is a value obtained by multiplying, for each sensor, the weight coefficient indicating for each sensor the degree of correlation between each of the abnormal events and the sensor, by the first score for each sensor calculated by the first score calculation unit, and configured to further calculate, for each abnormal event, the comprehensive evaluation score on the basis of the sensor-specific evaluation scores for the plurality of types of sensors.

In the plant abnormality diagnosis system according to the above [3], the comprehensive evaluation score is calculated, for each abnormal event, on the basis of the sensor-specific evaluation score obtained by multiplying, for each sensor, the weight coefficient by the first score, so that it is possible to accurately diagnose the abnormal event in the plant.

[4] In some embodiments, in the plant abnormality diagnosis system according to the above [3],
the comprehensive evaluation score calculation unit is configured to calculate the comprehensive evaluation score for each abnormal event by summing, for each abnormal event, the sensor-specific evaluation scores for the plurality of types of sensors.

In the plant abnormality diagnosis system according to the above [4], the comprehensive evaluation score for each abnormal event is calculated by summing, for each abnormal event, the sensor-specific evaluation scores for the plurality of types of sensors, so that it is possible to accurately diagnose the abnormal event in the plant.

[5] In some embodiment, in the plant abnormality diagnosis system according to any one of the above [1] to [4],
the first score calculation unit is configured to calculate, for each sensor, the first score on the basis of a difference between an actual measured value by the sensor and a predicted value therefor.

In the plant abnormality diagnosis system according to the above [5],
the first score indicating the degree of abnormality of the actual measured value by the sensor can be calculated on the basis of the difference between the actual measured value by the sensor and the predicted value.

[6] In some embodiments, in the plant abnormality diagnosis system according to the above [5],
the diagnostic result output unit is configured to, if the difference between the actual measured value by a specific sensor (e.g., the sensor 6b in the example shown in FIG. 9) among the plurality of types of sensors and the predicted value does not exceed a threshold thereof, exclude, from the candidate for the abnormal event in the diagnostic result, a specific abnormal event (e.g., the abnormal event B in the example shown in FIG. 9) associated with the specific sensor among the plurality of types of abnormal events, regardless of the comprehensive evaluation score for the specific abnormal event.

Among the plurality of types of abnormal events, there exists a certain abnormal event (the above-described specific abnormal event) for which, whenever such an abnormal event (the above-described specific abnormal event) has occurred, the difference between an actual measured value by the specific sensor and a predicted value therefor exceeds a threshold thereof. For example, in a case of a generator in the plant, when an abnormal event as a layer short circuit in the field winding has occurred, the difference between an actual measured value by a sensor that detects the field current and a predicted value therefor always exceeds a threshold thereof.

Accordingly, in the plant abnormality diagnosis system according to the above [6], for such a specific abnormal event, the fact that the difference between the actual measured value by the specific sensor among the plurality of types of sensors and the predicted value exceeds the threshold is defined as a necessary condition for the above-described specific abnormal event to be extracted as the above-described candidate by the diagnostic result output unit. Thus, when the difference between the actual measured value by the above-described specific sensor and the predicted value does not the threshold, the diagnostic result output unit does not extract the above-described specific abnormal event as the above-described candidate, regardless of the comprehensive evaluation score for the above-described specific abnormal event. Therefore, when the diagnostic result output unit extracts the candidates for the abnormal events, the candidates for the abnormal events can be appropriately narrowed down, so that it is possible to accurately diagnose the abnormal event in the plant.

### DESCRIPTION OF THE REFERENCE CHARACTERS

- 2: plant abnormality diagnosis system
- 4: plant
- 6, 6a, 6b, 6c, 6d: sensor
- 10: data acquisition unit
- 12: abnormal sign detection unit
- 14: first score calculation unit
- 16: comprehensive evaluation score calculation unit
- 18: diagnostic result output unit
- 20: storage unit
- 22: display unit
- 72: processor
- 74: RAM
- 76: ROM
- 78: HDD
- 80: input I/F
- 82: output I/F
- 84: bus
- B: boiler
- B1: boiler auxiliary equipment
- C: condenser
- D1: operating data
- E: weight coefficient table
- G: generator
- G1: generator auxiliary equipment
- G2: generator excitation circuit
- M: prediction model
- S1: first score
- S2: sensor-specific evaluation score
- S3: comprehensive evaluation score
- T: turbine
- T1: turbine auxiliary equipment
- W: weight coefficient

## Claims

1. A plant abnormality diagnosis system for diagnosing an abnormal event that occurs in a plant, the plant abnormality diagnosis system comprising:
a first score calculation unit configured to, with respect to a plurality of types of sensors installed in the plant, calculate, for each of the sensors, a first score indicating a degree of abnormality of an actual measured value by the sensor;
a comprehensive evaluation score calculation unit configured to, with respect to a plurality of types of abnormal events having a possibility of occurring in the plant, calculate, for each of the abnormal events, a comprehensive evaluation score indicating a magnitude of possibility that the abnormal event has occurred, on the basis of a weight coefficient indicating for each sensor a degree of correlation between each of the abnormal events and the sensor, and the first score for each sensor calculated by the first score calculation unit; and
a diagnostic result output unit configured to extract, from among the plurality of types of abnormal events, a candidate for the abnormal event that has occurred in the plant, on the basis of the comprehensive evaluation scores for the respective abnormal events calculated by the comprehensive evaluation score calculation unit, and configured to output information including the extracted candidate for the abnormal event as a diagnostic result for the plant.

2. The plant abnormality diagnosis system according to claim 1, wherein
the diagnostic result output unit is configured to extract, from among the plurality of types of abnormal events, the abnormal event having a highest comprehensive evaluation score as one of said candidates, on the basis of the comprehensive evaluation scores for the respective abnormal events calculated by the comprehensive evaluation score calculation unit.

3. The plant abnormality diagnosis system according to claim 1, wherein
the comprehensive evaluation score calculation unit is configured to, with respect to the plurality of types of abnormal events, calculate, for each of the abnormal events, a sensor-specific evaluation score that is a value obtained by multiplying, for each sensor, the weight coefficient indicating for each sensor the degree of correlation between each of the abnormal events and the sensor, by the first score for each sensor calculated by the first score calculation unit, and configured to further calculate, for each abnormal event, the comprehensive evaluation score on the basis of the sensor-specific evaluation scores for the plurality of types of sensors.

4. The plant abnormality diagnosis system according to claim 3, wherein
the comprehensive evaluation score calculation unit is configured to calculate the comprehensive evaluation score for each abnormal event by summing, for each abnormal event, the sensor-specific evaluation scores for the plurality of types of sensors.

5. The plant abnormality diagnosis system according to claim 1, wherein
the first score calculation unit is configured to calculate, for each sensor, the first score on the basis of a difference between an actual measured value by the sensor and a predicted value therefor.

6. The plant abnormality diagnosis system according to claim 5, wherein
the diagnostic result output unit is configured to, if the difference between the actual measured value by a specific sensor among the plurality of types of sensors and the predicted value does not exceed a threshold thereof, exclude, from the candidate for the abnormal event in the diagnostic result, a specific abnormal event associated with the specific sensor among the plurality of types of abnormal events, regardless of the comprehensive evaluation score for the specific abnormal event.
